# FASCICULE DE BREVET EUROPEEN

(11) **EP 1 875 099 B1**
(45) Date de publication et mention de la délivrance du brevet: **01.07.2009**
(21) Numéro de dépôt: 06743822.6
(22) Date de dépôt: 20.04.2006
(51) Int. Cl.: F16F 1/373, F16F 1/36, A47C 23/04, A47C 27/06

(54) **ORGANE RESSORT POUR CARCASSE DE SUSPENSION D UN SIEGE, SOMMIER, MATELAS OU AUTRE**
FEDERELEMENT FÜR EINEN SITZAUFHÄNGUNGSRAHMEN, EINE MATRATZE ODER DERGLEICHEN
SPRING ELEMENT FOR A SEAT SUSPENSION FRAME, A MATTRESS AND THE SIMILAR

(30) Priorité: 22.04.2005 FR 0504065
(43) Date de publication de la demande: 09.01.2008
(73) Titulaire: DELAHOUSSE ET FILS, 49320 Vauchrétien (FR)
(72) Inventeur: DELAHOUSSE, Marc, F-49000 Angers (FR); GREGOIRE, Olivier, F-49320 Coutures (FR)
(74) Mandataire: Michelet, Alain
(86) Numéro de dépôt international: PCT/FR2006/050364
(87) Numéro de publication internationale: WO 2006/111685

(56) Documents cités:
- EP-A- 1 122 457
- EP-A- 1 335 148
- WO-A-20/04086915
- DE-U1- 20 108 407
- FR-A- 2 790 929

## Description

La présente invention a trait au domaine général de la literie. Elle concerne en particulier les organes ressorts pour carcasses de suspension d'un siège, sommier, matelas ou similaire.

Les carcasses de ce type comportent de manière classique une pluralité de ressorts métalliques configurés en spirales, qui sont soit fortement liaisonnés les uns aux autres pour conférer une bonne cohésion et une bonne stabilité à la structure qui devient rigide, soit ensachés dans des poches textiles collées entre elles.

Mais les carcasses avec ressorts métalliques en question présentent plusieurs inconvénients :
Sur le plan de l'hygiène, les ensembles de ressorts du matelas qui ont fait l'objet d'opérations préalables de lubrification et de traitements thermiques, comportent souvent des traces desdits lubrifiants ou leurs résidus. De plus, dans le cas de ressorts ensachés, la carcasse est alors propice au confinement de l'air et à la formation d'humidité entre les nombreuses cloisons textiles.

En outre, de par leur nature et la complexité de leur assemblage, ces carcasses avec ressorts métalliques ne sont pratiquement pas recyclables, à moins d'employer des moyens extrêmement lourds.

Sur le plan des performances, les systèmes de production existants ne permettent pas d'adapter aisément le matelas en fonction de la morphologie de chaque utilisateur, et il est notamment difficile de réaliser un matelas de deux personnes comportant une fermeté différente de chaque côté. De plus, les phases de compression sur le matelas sont parfois génératrices de bruit de contact entre les spires, de grincement au niveau des liaisons métalliques, ou encore de frottement entre les couches textiles.

Par ailleurs, les carcasses à ressorts non ensachés sont rigides et incompatibles avec une utilisation comme éléments constitutifs de sommiers relevables par motorisation.

De plus, le poids de ce genre de carcasse est généralement assez élevé, et des arguments négatifs tels que le magnétisme généré par le métal sont souvent utilisés contre ces systèmes.

Pour remédier à certains de ces inconvénients, on a développé des organes ressorts en matériau thermoplastique, par exemple décrits dans les documents EP-1 335 148 ou encore FR-2 790 929.

Mais les organes ressorts en question ne proposent pas des caractéristiques de compressibilité optimales.

La présente invention a pour but de pallier à ces inconvénients en proposant un nouveau type d'organe ressort en matériau thermoplastique qui présente d'excellentes caractéristiques de compressibilité, en particulier une course de déformation importante par rapport à sa hauteur, et des possibilités de compression très homogènes.

Ce nouvel organe ressort garantit à l'utilisateur une hygiène optimale, une grande indépendance des ressorts, de nombreuses possibilités de personnalisation, une grande flexibilité de la carcasse et un poids relativement léger ; il est en outre très silencieux.

L'organe ressort en question est destiné à être interposé entre une structure support et une couche de matière de rembourrage.

Selon l'invention, cet organe ressort en matériau thermoplastique présente une conformation symétrique autour d'un axe central longitudinal et comprend :
- une embase apte à coopérer avec ladite structure support,
- une structure d'appui destinée à former une surface de contact avec la couche de matière de rembourrage, et
- des moyens de suspension, ménagés entre ladite embase et ladite structure d'appui ; ces moyens de suspension sont constitués de plusieurs bras de suspension rectilignes ou sensiblement rectilignes, répartis de manière rayonnée autour dudit axe longitudinal, ceci selon trois étages superposés A, B et C, les bras des premier et troisième étages A et C, qui s'étendent respectivement depuis la structure d'appui et depuis l'embase, étant chacun raccordés à deux bras de l'étage intercalaire B, lesquels bras s'étendent, d'une part, dans chacun desdits étages superposés A, B et C, en biais entre ladite embase et ladite structure d'appui, et d'autre part, entre deux étages adjacents, selon deux pentes contraires, et lesquels bras de deux étages adjacents, raccordés par leur extrémité en regard au niveau d'une charnière de raccordement pour former des Vé de suspension, sont décalés transversalement.

Ces Vé de suspension travaillent alors généralement, lors de la compression de l'organe ressort, d'une part, en torsion au niveau de ladite charnière de raccordement, et d'autre part, en flexion au niveau desdits bras constitutifs. L'organe ressort correspondant est avantageusement réalisé monobloc par une seule opération de moulage du matériau thermoplastique.

De préférence, les bras de suspension de l'un des étages sont décalés transversalement par rapport aux bras de suspension de tous les autres étages.

Selon encore une autre particularité, les moyens de suspension comportent avantageusement :
- de trois à six bras dans les premier et troisième étages, et
- de six à douze bras pour l'étage intercalaire.

Toujours selon une forme de réalisation préférée, chaque bras du premier étage se prolonge par deux bras du second étage entre lesquels il est intercalé, et ces deux bras du second étage sont chacun raccordés à l'un des bras du troisième étage, chacun des bras du troisième étage étant raccordé à deux bras du second étage, et chaque bras du second étage étant intercalé entre l'un desdits bras du premier étage et l'un desdits bras du troisième étage.

Encore selon une autre particularité de l'invention, l'organe ressort comporte une structure d'appui munie d'une ouverture centrale délimitée par une bordure interne, et une embase délimitée par une bordure périphérique dont le calibre est inférieur à celui de la bordure interne de ladite structure d'appui. Dans ce cas, les bras du premier étage convergent avantageusement depuis ladite bordure interne de ladite structure d'appui vers l'axe longitudinal de l'organe ressort ; les bras du troisième étage divergent à partir de la bordure périphérique de l'embase vers l'extérieur ; et les bras de l'étage intermédiaire s'étendent en biais entre les extrémités en regard desdits premier et troisième étages de bras pour former les Vé de suspension. En outre, les bras des différents étages s'étendent, lors de la compression de l'organe ressort, dans l'espace séparant les bordures de l'ouverture centrale de la structure d'appui et la périphérie de l'embase.

Toujours selon une autre disposition de l'invention, les Vé de suspension formés par deux bras de deux étages adjacents présentent, au repos, un angle de l'ordre de 30° à 40°.

Un tel organe ressort peut être fixé (de manière amovible ou non) sur toute structure support constitutive du siège, sommier ou matelas équipé, ceci par l'intermédiaire de son embase. Deux éléments de suspension de ce type, identiques ou similaires, peuvent aussi être assemblés par leur embase pour former un organe ressort susceptible d'être interposé entre deux couches de rembourrage.

La présente invention a encore pour objet la carcasse de suspension d'un siège, sommier, matelas ou autre, comportant des organes ressorts tels que décrits ci-dessus, interposés entre une structure support et une couche de matière de rembourrage.

La carcasse en question comprend, de manière avantageuse, une structure support en forme de feuille, réalisée en matériau souple ou semi-rigide, sur l'une au moins des faces de laquelle est fixée une pluralité d'organes ressorts tels que décrits ci-dessus.

Selon une forme particulière de réalisation, des organes ressorts tels que décrits précédemment sont agencés sur les deux faces de la feuille support, de sorte que les premiers organes ressorts, disposés sur l'une des faces de ladite feuille, soient en regard des seconds organes ressorts disposés sur l'autre face de ladite feuille. Chacun des premiers organes ressorts est solidarisé avec l'un des seconds organes ressorts au niveau d'un orifice de réception aménagé au sein de ladite feuille, formant ainsi des couples d'organes ressorts disposés de part et d'autre de ladite feuille, l'embase de l'un des organes ressorts dudit couple constituant l'élément de maintien de l'autre organe ressort de ce couple.

La présente invention a encore pour objet la structure de siège, sommier ou matelas comprenant une carcasse telle que décrite ci-dessus, associée à des matières de rembourrage et de garnissage.

L'invention va maintenant être illustrée, sans être aucunement limitée, par la description suivante de différentes formes de réalisation possibles, données uniquement à titre d'exemples, et représentées sur les dessins annexés dans lesquels :
- la figure 1 est une vue en coupe longitudinale d'un matelas, montrant schématiquement une première forme de réalisation d'une carcasse à ressorts conforme à l'invention ;
- la figure 2 est une vue de côté d'un organe ressort particulier, équipant la carcasse de la figure 1, illustré entre une structure support et une couche de matière de rembourrage dessinées schématiquement ;
- la figure 3 est une vue générale, en perspective, de l'organe ressort de la figure 2 ;
- la figure 4 est une vue de dessus de l'organe ressort selon les figures 2 et 3 ;
- la figure 5 est une vue en coupe longitudinale d'une variante de réalisation d'un matelas conforme à l'invention, montrant schématiquement la structure d'une deuxième forme de réalisation possible de carcasse dans laquelle les organes ressorts sont disposés par paires ;
- la figure 6 est une vue en perspective d'un couple d'organes ressorts équipant la carcasse de la figure 5 ;
- la figure 7 est une vue en coupe verticale du couple d'organes ressorts de la figure 6 selon le plan 7-7, illustrant schématiquement son association avec une structure support médiane.

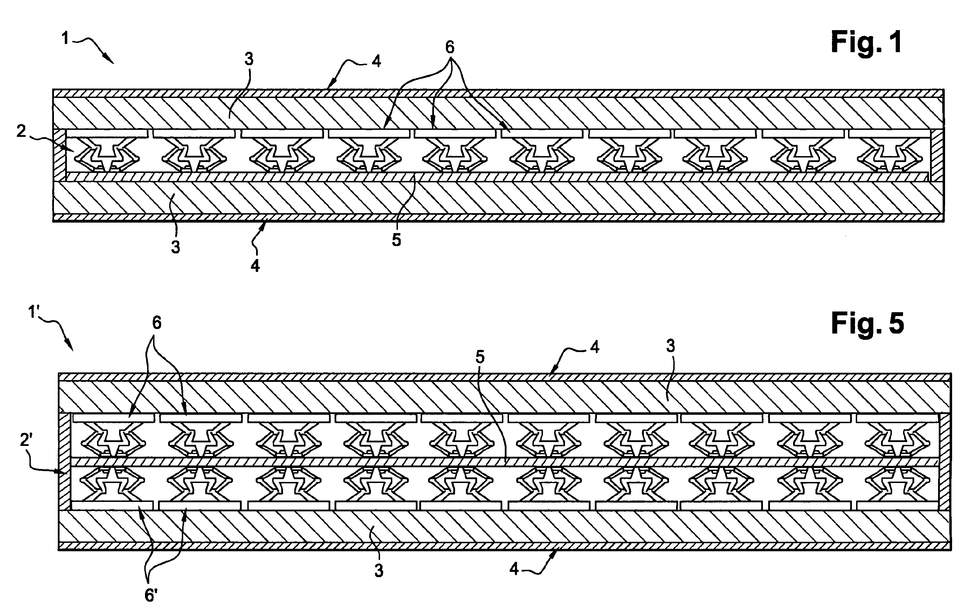

La figure 1 est une représentation schématique d'un matelas 1 équipé d'une carcasse de suspension 2 conforme à l'invention ; cette carcasse 2 est classiquement interposée entre deux couches de matériau de rembourrage 3 revêtues d'une épaisseur de garnissage 4.

La carcasse de suspension 2 correspondante comprend ici une structure support 5, en forme de feuille souple, sur l'une des faces de laquelle est agencée une pluralité d'organes ressorts 6. Ces organes ressorts 6 sont chacun fixés sur la feuille support 5 par des moyens de liaison appropriés ; à titre d'exemple, les organes ressorts 6 peuvent être fixés de manière démontable, au moyen d'un élément de maintien qui est rapporté sur l'autre face de ladite feuille support.

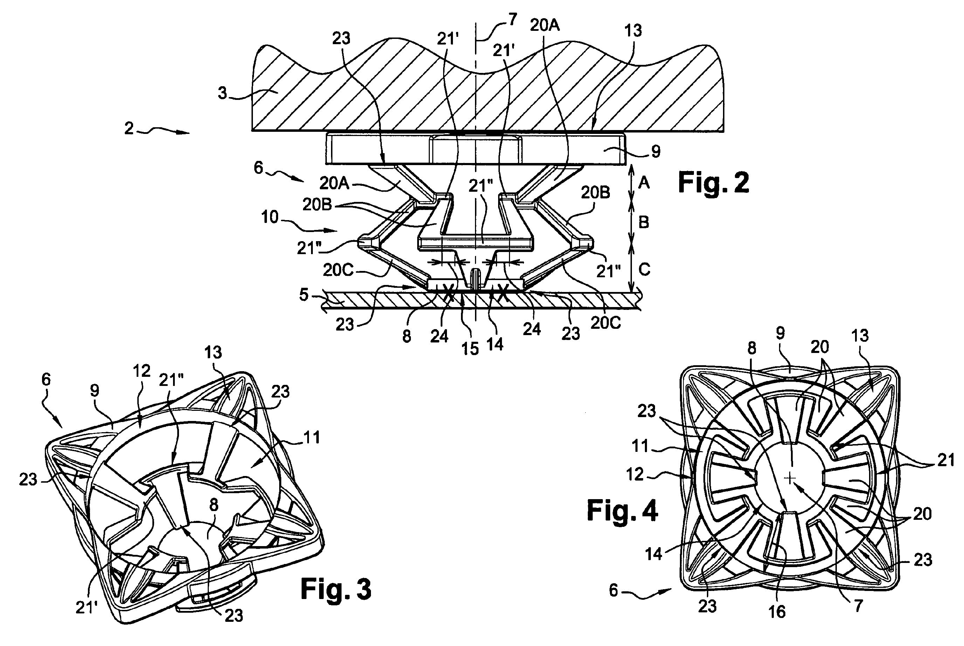

Les organes ressorts 6 en question sont représentés plus en détails sur les figures 2 à 4. Ces organes ressorts 6, de conformation générale symétrique autour d'un axe central longitudinal 7, sont réalisés monoblocs en matériau thermoplastique, par exemple du genre élastomère.

Ils sont chacun constitués, comme on peut le voir en particulier sur la figure 2, - d'une embase 8, apte à reposer contre la feuille support 5, - d'une structure d'appui 9, assurant le contact contre la couche de rembourrage 3 disposée en regard, et - de moyens de suspension 10, ménagés entre ladite embase 8 et ladite structure d'appui 9, déterminant la fermeté ou la dureté du matelas.

La structure d'appui 9 a une forme générale parallélépipédique, de faible épaisseur, dans laquelle est aménagée une ouverture centrale 11 délimitée par une bordure interne circulaire 12.

La face supérieure 13 de cette structure d'appui 9 est adaptée pour assurer le contact contre la couche de rembourrage 3 disposée en regard ; cette face supérieure 13 constitue une surface adéquate sur laquelle prend appui ladite couche de rembourrage 3, sans risques de dégradation ni d'altération de cette dernière.

L'embase 8 se présente quant à elle sous la forme générale d'un petit cylindre, également de faible épaisseur, délimité par une bordure périphérique cylindrique 14. La face inférieure 15 de cette embase 8 est conformée pour venir reposer, et pour être fixée, sur la feuille support 5.

Les dimensions de l'embase 8, et en particulier son encombrement périphérique, sont inférieures à celles de la bordure interne 12 de la structure d'appui 9 ; un espace interne annulaire 16 est ainsi délimité au sein de l'organe ressort 6, par la bordure périphérique 14 de l'embase 8, à l'intérieur, et par la bordure interne 12 de la structure d'appui 9, à l'extérieur (figure 4).

Les moyens de suspension 10 sont quant à eux constitués d'une pluralité de bras rectilignes 20 répartis de manière rayonnée et de manière régulière autour de l'axe longitudinal 7, comme on peut le voir en particulier sur la figure 4. Ces bras rectilignes 20 sont répartis selon plusieurs étages superposés, entre l'embase 8 et la structure d'appui 9 (figure 2) ; les bras rectilignes 20 de chaque étage sont décalés transversalement par rapport aux bras 20 de tous les autres étages (figure 4).

Les bras rectilignes 20 de deux étages adjacents sont convenablement raccordés par l'intermédiaire de charnières de raccordement 21, au niveau de leurs extrémités en regard, pour former des Vé de suspension.

Comme détaillé ci-après, les Vé de suspension correspondants sont adaptés pour travailler, lors de la compression dudit organe ressort, d'une part, en torsion au niveau de leur charnière de raccordement 21, et d'autre part, en flexion au niveau de leurs bras 20 constitutifs.

Cette conformation particulière des moyens de suspension confère à l'organe ressort des caractéristiques dynamométriques de compressibilité relativement linéaires.

En l'occurrence, les bras rectilignes 20 sont répartis selon trois étages, avec un étage intercalaire B de huit bras rectilignes 20B raccordant convenablement des premier et troisième étages A et C de quatre bras rectilignes 20A et 20C ; ces derniers s'étendent respectivement à partir de la structure d'appui 9 et de l'embase 8.

Dans chacun de ces étages A, B et C, les bras rectilignes 20 s'étendent en biais entre l'embase 8 et la structure d'appui 9, cela selon un même angle par rapport à l'axe longitudinal 7. Dans le présent cas, les bras rectilignes 20A et 20C s'étendent selon une même pente ou sensiblement selon une même pente par rapport à l'axe 7 ; les bras rectilignes 20B de l'étage intercalaire B s'étendent quant à eux selon une pente contraire à celle des bras 20A et 20C précités.

Les bras rectilignes 20A et 20C des premier et troisième étages A et C sont convenablement raccordés par les charnières de liaison 21 avec les bras 20B de l'étage intercalaire B. Ils forment ainsi, au repos, des Vé de suspension dont la pointe est formée par la charnière de raccordement 21 ; au repos, l'angle entre les bras 20 de chaque Vé est avantageusement compris entre 30 ° et 40 °.

Les bras rectilignes 20 de chaque étage sont décalés transversalement par rapport aux bras 20 des étages adjacents (figure 4), ce qui a pour conséquence d'assurer le travail en torsion des Vé de suspension lors d'une opération de compression axiale de l'organe ressort ; dans la présente réalisation, les bras rectilignes 20 de chacun des étages A, B, C sont en plus décalés transversalement par rapport aux bras de tous les autres étages.

En l'espèce, chacun des bras 20A du premier niveau A s'étend depuis la bordure interne 12 de la structure d'appui 9 vers l'axe longitudinal 7, à partir d'une jonction monobloc 23.

Ces bras rectilignes 20A sont chacun prolongés, au niveau d'une charnière de raccordement 21', par deux bras 20B de l'étage intermédiaire B ; ces deux bras 20B sont décalés transversalement par rapport au bras 20A du premier étage A auquel ils sont raccordés, et ils s'étendent tous deux vers la périphérie.

Chacun de ces deux bras intermédiaires 20B est lui-même prolongé, au niveau de son autre charnière de raccordement 21", par un bras rectiligne 20C du troisième étage C ; ces bras rectilignes 20C du troisième étage C convergent, depuis la charnière de raccordement 21", jusqu'à une jonction monobloc 23 assurant le raccordement avec l'embase 8. Là encore, les bras 20C sont décalés transversalement par rapport aux bras rectilignes 20A et 20B des premier et second étages A et B.

Pour être complet, chaque bras rectiligne 20C du troisième étage C est raccordé par une charnière 21" à deux bras rectilignes 20B de l'étage intercalaire B, entre lesquels il est interposé.

Ainsi, lors de la compression de l'organe ressort 6 selon l'invention, ce qui correspond au rapprochement de la surface d'appui 9 et de l'embase 8, les Vé de suspension se déforment au niveau de leur charnière de raccordement 21 par un travail en torsion. En l'occurrence, les charnières de raccordement 21 se déforment par un phénomène de torsion au niveau du tronçon de matière 24 raccordant les extrémités juxtaposées des bras rectilignes 20.

Lors de cette compression, les bras 20 de tous les étages A, B et C travaillent en flexion. Les jonctions inférieures et supérieures 23 ne participent pas ou simplement très peu à la fonction de compression de l'organe ressort,.

Lorsque l'organe ressort est comprimé, les bras 20 des différents étages A, B et C restent dans l'espace annulaire 16 ; les bras 20 des différents étages étant décalés transversalement, ils vont occuper cet espace annulaire 16 sans se superposer.

Ainsi, l'organe ressort 6 comprimé au maximum présente un encombrement minimal, qui correspond en l'occurrence à l'épaisseur de la structure d'appui 9.

Lorsque la force de compression exercée sur l'organe ressort cesse, ou au moins diminue, les Vé des moyens de suspension 6 reprennent leur conformation au repos, du fait de forces de rappel élastiques exercées par les charnières de raccordement 21 et par les bras flexibles 20.

De manière générale, ces moyens de suspension ont des caractéristiques de compression particulièrement intéressantes, en particulier du fait de la linéarité de leur courbe dynamométrique et de leur stabilité latérale.

Le décalage transversal des différents bras évite leur superposition lors des phases de compression ; cela permet d'optimiser les caractéristiques de compressibilité de l'organe ressort, et aussi d'éviter le contact entre les bras de suspension pour limiter la présence de quelconques bruits lors des phases de compression et de détente.

D'autre part, la déformation en compression de l'organe ressort n'entraîne aucune augmentation d'encombrement. Une fois comprimé, l'encombrement de cet organe ressort est minimal ce qui permet d'optimiser sa course de déformation.

En outre, les bras de suspension rayonnés sont régulièrement répartis au niveau des trois étages A, B et C autour de l'axe longitudinal 7, ce qui procure à l'organe ressort 6 une grande homogénéité de compression, quelles que soient les forces appliquées (axiales ou en biais).

On comprend bien que la carcasse équipée de tels organes ressorts pourrait être incorporée dans toute autre structure de suspension, par exemple un siège, un sommier, ou similaire.

La figure 5 représente un matelas 1' dont la carcasse de suspension 2' constitue une variante de celle décrite ci-dessus en relation avec les figures 1 à 4.

On retrouve, sur cette figure 5, une carcasse de suspension 2' comprenant une structure support 5 en forme de feuille, de préférence souple ou semi-rigide, sur l'une des faces de laquelle sont agencés des « premiers » organes ressorts 6, comme décrit précédemment en relation avec les figures 1 à 4.

D'autres organes ressorts 6', dénommés ci-après « seconds » organes ressorts, sont ici rapportés sur l'autre face de la feuille support 5, chacun en regard et coaxialement à l'un des premiers organes ressorts 6. Ces seconds organes ressorts 6' ont une structure identique ou similaire à celle des premiers organes ressorts 6.

La feuille support 5 s'étend ici au milieu de la carcasse de suspension 2' et au milieu du matelas 1' équipé ; elle est de plus interposée entre les couples de premier et second organes ressorts 6 et 6'.

Le matelas 1' muni d'une telle carcasse de suspension 2' est alors particulièrement adapté pour équiper les sommiers articulés, du fait de sa souplesse, de sa capacité importante de déformation et de son faible poids.

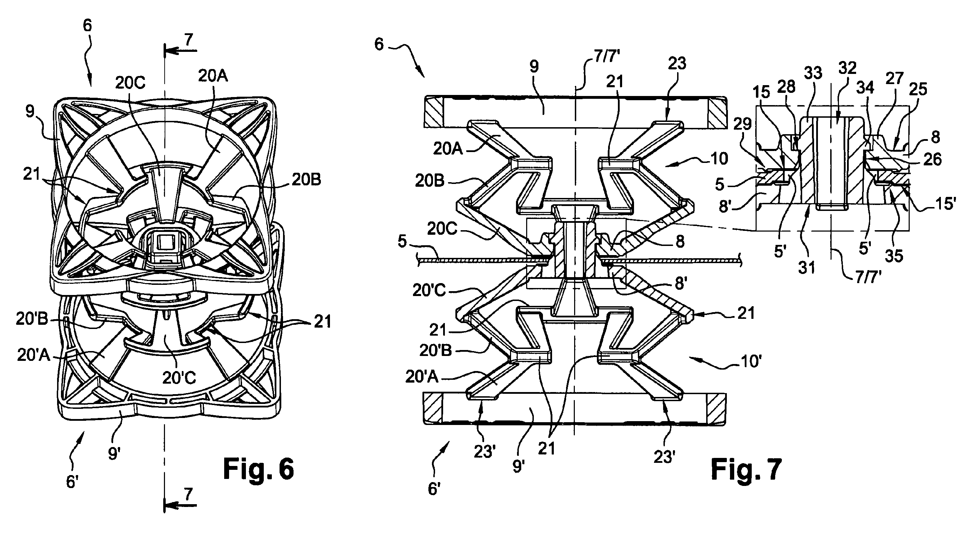

Une forme de réalisation possible pour le couple d'organes ressorts est représentée en détails sur les figures 6 et 7.

Sur ces figures, on retrouve un premier organe ressort 6 et un second organe ressort 6', tous deux de forme générale identique à celui décrit précédemment en relation avec les figures 2 à 4.

Ces deux organes ressorts 6 et 6', réalisés chacun monobloc par moulage de matière thermoplastique, comportent chacun respectivement - une embase 8 et 8', - une structure d'appui 9 et 9', et - des moyens de suspension 10 et 10' constitués chacun de plusieurs bras rectilignes 20, formant ensemble des Vé de suspension, s'étendant entre ladite embase 8, 8' et ladite structure d'appui 9,9'.

On observe encore que les embases 8 et 8' de ces couples d'organes ressorts 6 et 6' sont juxtaposées et solidaires l'une de l'autre, de part et d'autre de la feuille support 5.

A cet effet, les embases 8 et 8' juxtaposées des organes ressorts 6 et 6' sont aptes à coopérer par le biais de moyens structurels complémentaires, du genre tenons/mortaises, de sorte à obtenir une fixation amovible desdits organes ressorts 6 et 6' sur la feuille support 5.

Plus précisément, tel que détaillé sur la figure 7, l'embase 8 du premier organe ressort 6 a ici une forme générale annulaire, délimitée principalement par une face inférieure 15, une face supérieure 25 et un orifice central 26, ici de forme rectangulaire. La face supérieure 25 de cette embase 8 est munie d'une nervure rectangulaire 27, au sein de laquelle est aménagé un épaulement annulaire 28. Cet épaulement 28 s'étend de manière concentrique à l'axe 7/7'. La face inférieure 15 de l'embase 8 est quant à elle plane, munie uniquement d'une petite nervure annulaire 29, concentrique à l'axe 7/7', aménagée à distance de l'orifice 26.

L'embase 8' du second organe ressort 6' est également de forme générale annulaire, délimitée par une face supérieure 15', une face inférieure 31, et un orifice central rectangulaire 32 coaxial à l'axe 7/7'.

La face supérieure 15' de cette embase 8' est munie d'un prolongement tubulaire monobloc 33, de section rectangulaire, prolongeant l'orifice central rectangulaire 32. On notera que ce prolongement 33 a des dimensions externes correspondant, au jeu près, à celles des dimensions internes de l'orifice 26 de l'embase 8 du premier organe ressort 6. Ce prolongement monobloc 33, formant tenon, comporte encore, au niveau de la face externe de sa bordure d'extrémité libre, des languettes ou ergots saillants monoblocs 34 (ici au nombre de quatre) uniformément répartis sur sa périphérie. La face supérieure 15' de l'embase 8' comporte encore une petite nervure annulaire 35, aménagée concentriquement à l'axe 7', à proximité du tenon 33. Cette nervure annulaire 35 a un diamètre légèrement inférieur à celui de la nervure 29 aménagée sur l'embase 8 du premier organe ressort 6.

L'assemblage des deux organes ressorts 6 et 6' sur la feuille support 5, au travers d'un orifice de réception 5', est illustré en détails sur la figure 7.

En l'espèce, le second organe ressort 6' est agencé de sorte que le tenon 33 de son embase 8' traverse l'orifice de réception 5' aménagé dans la feuille support 5. On notera que le diamètre externe du tenon 33 est inférieur à celui de l'orifice de réception 5', notamment pour éviter la présence de tension sur la feuille support 5. La face supérieure 15' de l'embase 8' de ce second organe ressort 6' vient alors se plaquer contre le pourtour de l'orifice de réception 5'. Le premier organe ressort 6 est ensuite rapporté sur le second organe ressort 6' convenablement positionné, de sorte que le tenon 33 de ce dernier vienne s'emmancher à force au travers de l'orifice 26 de l'embase 8 du premier organe ressort 6, formant mortaise.

Une fois le tenon 33 convenablement emmanché, ses ergots d'extrémités 34 viennent se loger dans l'épaulement annulaire 28 de l'embase 8, ce qui permet une solidarisation efficace des premier et second organes ressorts 6 et 6' l'un avec l'autre, tout en rendant possible leur désolidarisation par un simple écartement à force (la structure des ergots saillants 34 est adaptée en conséquence). Les organes ressorts 6 et 6' sont ainsi maintenus de manière amovible sur la feuille support 5.

Dans cette forme de réalisation, on comprend que l'embase 8' du second organe ressort 6' constitue un élément de maintien du premier organe ressort 6, et inversement que l'embase 8 du premier organe ressort 6 constitue l'élément de maintien du second organe ressort 6'.

Selon cette forme de réalisation, on comprend que la section rectangulaire du tenon 33 du premier organe ressort 6 venant se loger au travers de l'orifice 26 du second organe ressort 6', de section rectangulaire complémentaire, permet un verrouillage en rotation entre les deux organes ressorts 6 et 6'.

Sur la figure 7, on remarque encore que le pourtour de l'orifice de réception 5' de la feuille support 5 est interposé entre la face inférieure 15 de l'embase 8 et la face supérieure 15' de l'embase 8'. La feuille support 5 est avantageusement pincée entre les couples d'organes ressorts 6, 6' ; les nervures annulaires 29 et 35 précitées optimisent le maintien.

Comme précisé ci-dessus, on peut envisager des réalisations dans lesquelles les deux organes ressorts 6 et 6' sont assemblés de manière amovible en préservant un certain jeu entre les faces 15 et 15' en regard de leur embase respective 8 et 8', ce jeu étant légèrement supérieur à l'épaisseur de la feuille support 5.

L'assemblage des couples d'organes ressorts 6 et 6' entre eux et avec la feuille support 5 peut être réalisé manuellement, mais on utilisera de préférence des moyens mécanisés adaptés.

On note encore que l'orifice 32 du tenon 33 du second organe ressort 6' constitue un conduit ou canal, assurant une communication entre les espaces situés de part et d'autre de la feuille support 5. Les différents conduits 32 assurent ainsi une aération efficace du volume interne du matelas.

Les organes ressorts 6 et 6' décrits ci-dessus sont réalisés monoblocs, chacun à partir d'un moule différent pour constituer les moyens d'encliquetage complémentaires.

Dans des variantes de réalisation, les moyens de fixation des organes ressorts entre eux, ou avec la structure support, pourront être prévus non amovibles. Dans ce cas, ils seront avantageusement prévus aisément dégradables en vue de faciliter leur démontage pour le recyclage.

Les carcasses de suspension conformes à l'invention sont particulièrement intéressantes du fait que leurs différents éléments constitutifs (organes ressorts 6, 6' et feuille support 5) peuvent tout-à-fait être fabriqués sur un site particulier, puis être transportés dissociés jusqu'au site d'assemblage final du matelas. Cette particularité est possible du fait de la structure simplifiée de la carcasse et de sa facilité de montage. Dans ce cas, on comprend bien que le volume occupé par les carcasses démontées peut être relativement faible, en particulier par rapport au volume occupé par les carcasses de matelas prémontées, connues à ce jour, fournies aux fabricants de matelas. De même, le volume occupé par une carcasse prémontée, conforme à l'invention, reste encore limité, en particulier du fait de sa capacité de déformation au niveau de la feuille support. Cette structure de carcasse permet également de faciliter les opérations de démontage, en vue de leur recyclage, notamment lors de l'emploi de moyens de fixation amovibles pour solidariser les organes ressorts avec le support.

Les opérations de recyclage en question sont encore optimisées du fait que les organes ressorts sont réalisés en matériau thermoplastique. En outre, les matériaux thermoplastiques correspondants garantissent à l'utilisateur une hygiène optimale de par leur inertie à l'humidité et au confinement, ce qui n'est pas le cas avec les matelas utilisant des ressorts métalliques. De par sa structure et du fait des matériaux utilisés, la carcasse à ressorts conforme à l'invention est relativement légère.

Encore dans une variante de réalisation, les organes ressorts 6 et 6' peuvent être assemblés par leur embase (de manière démontable ou non) pour obtenir des éléments de suspension utilisables tels quels, sans structure support intermédiaire. Dans ce cas, l'un des organes ressorts 6, 6' fait office de structure support pour l'autre organe ressort 6, 6'. De tels éléments de suspension peuvent alors être interposés entre deux couches de matière de rembourrage (par exemple des plaques de mousse alvéolaire) ; les couples d'organes ressorts correspondants peuvent alors éventuellement être séparés les uns des autres par une structure de remplissage type mousse alvéolaire par exemple.

De manière générale, on rappellera encore que la structure particulière des organes ressorts, avec des moyens de suspension formés de Vé de suspension travaillant en torsion et en flexion, permet d'obtenir des carcasses avec des qualités de suspension réellement intéressantes, en particulier en terme de linéarité de courbe dynamométrique et de stabilité latérale. Ces organes ressorts sont encore particulièrement intéressants du fait de leur absence de bruit en cours de déformation, mais aussi pour leur très faible encombrement en compression.

## Revendications

1. Organe ressort en matériau thermoplastique pour carcasse de suspension (2, 2') d'un siège, sommier, matelas ou autre, lequel organe ressort (6, 6') destiné à être interposé entre une structure support (6, 6', 5) et une couche de matière de rembourrage (3), présente une conformation symétrique autour d'un axe central longitudinal (7) et comprend :
- une embase (8) apte à coopérer avec ladite structure support (6, 6', 5),
- une structure d'appui (9) destinée à former une surface de contact avec la couche de matière de rembourrage (3), et
- des moyens de suspension (10) ménagés entre ladite embase (8) et ladite structure d'appui (9),
**caractérisé en ce que** lesdits moyens de suspension (10) sont constitués de plusieurs bras de suspension (20) rectilignes ou sensiblement rectilignes, répartis de manière rayonnée autour dudit axe longitudinal (7), ceci selon trois étages superposés A, B, et C, les bras (20A et 20C) des premier et troisième étages A et C, qui s'étendent respectivement depuis la structure d'appui (9) et depuis l'embase (8), étant chacun raccordés à deux bras (20B) de l'étage intercalaire B, lesquels bras (20) s'étendent, d'une part, dans chacun desdits étages superposés A, B et C, en biais entre ladite embase (8) et ladite structure d'appui (9), et d'autre part, entre deux étages adjacents, selon deux pentes contraires, et lesquels bras (20) de deux étages adjacents, raccordés par leurs extrémités en regard au niveau d'une charnière de raccordement (21) pour former des Vé de suspension, sont décalés transversalement.

2. Organe ressort selon la revendication 1, **caractérisé en ce que** les bras de suspension (20) de l'un des étages A, B, ou C sont décalés transversalement par rapport aux bras de suspension (20) de tous les autres étages.

3. Organe ressort selon l'une quelconque des revendications 1 ou 2, **caractérisé en ce que** les moyens de suspension (10) comportent :
- de trois à six bras (20A et 20C) dans les premier et troisième étages A et C, et
- de six à douze bras (20B) pour l'étage intercalaire B.

4. Organe ressort selon l'une quelconque des revendications 1 à 3, **caractérisé en ce que** chaque bras (20A) du premier étage A se prolonge par deux bras (20B) du second étage B entre lesquels il est intercalé, lesquels bras (20B) du second étage B sont chacun raccordés à l'un des bras (20C) du troisième étage C, chacun des bras (20C) du troisième étage C étant raccordé à deux bras (20B) du second étage B, et chaque bras (20B) dudit second étage B étant intercalé entre l'un desdits bras (20A) et l'un desdits bras (20C).

5. Organe ressort selon l'une quelconque des revendications 1 à 4, **caractérisé en ce qu'**il comporte une structure d'appui (9) munie d'une ouverture centrale (11) délimitée par une bordure interne (12), et une embase (8) délimitée par une bordure périphérique (14) dont le calibre est inférieur à celui de ladite bordure interne (12) de la structure d'appui (9), les bras (20A) du premier étage convergeant depuis ladite bordure interne (12) de la structure d'appui (9) vers le centre de l'organe ressort (6, 6'), les bras (20C) du troisième étage C divergeant à partir de ladite bordure périphérique (14) de l'embase (8) vers l'extérieur, et les bras (20B) de l'étage intermédiaire B s'étendant en biais entre les extrémités en regard des bras (20A et 20C) desdits premier et troisième étages A et C, les bras (20) des différents étages A, B et C s'étendant, lors de la compression de l'organe ressort (6, 6'), dans l'espace (16) séparant les bordures (12, 14) de l'ouverture centrale (11) de la structure d'appui (9) et de l'embase (8).

6. Organe ressort selon l'une quelconque des revendications 1 à 5, **caractérisé en ce que**, au repos, l'angle entre les bras (20) de deux étages adjacents est de l'ordre de 30° à 40°.

7. Organe ressort selon l'une quelconque des revendications 1 à 6, **caractérisé en ce qu'**il est réalisé monobloc par une opération unique de moulage de matière thermoplastique.

8. Organe ressort pour siège, sommier, matelas ou autre, **caractérisé en ce qu'**il est constitué de deux organes ressorts (6, 6') selon l'une quelconque des revendications 1 à 7 assemblés par leur embase (8, 8')

9. Carcasse de suspension d'un siège, sommier, matelas ou autre, comportant des organes ressorts (6, 6') selon l'une quelconque des revendications 1 à 7, interposés entre une structure support (6, 6', 5) et une couche de matière de rembourrage (3).

10. Carcasse selon la revendication 9, **caractérisée en ce qu'**elle comprend une structure support (5) en forme de feuille, réalisée en matériau souple ou semi-rigide, sur l'une au moins des faces de laquelle sont fixés une pluralité d'organes ressorts (6, 6') selon l'une quelconque des revendications 1 à 7.

11. Carcasse selon la revendication 10, **caractérisée en ce qu'**elle comprend des premiers organes ressorts (6) selon l'une quelconque des revendications 1 à 7 aménagés sur l'une des faces de la feuille support (5), et des seconds organes ressorts (6'), également selon l'une quelconque des revendications 1 à 7, agencés sur l'autre face de ladite feuille support (5), en regard desdits premiers organes ressorts (6'), chacun desdits premiers organes ressorts (6) étant solidarisé avec l'un desdits seconds organes ressorts (6') au niveau d'un orifice de réception (5') aménagé au sein de ladite feuille (5), formant ainsi des couples d'organes ressorts disposés de part et d'autre de ladite feuille support (5), l'embase (8, 8') de l'un des organes ressorts (6, 6') dudit couple constituant l'élément de maintien de l'autre organe ressort (6, 6') de ce couple.

12. Structure de siège, sommier ou matelas comprenant une carcasse (2, 2') selon l'une quelconque des revendications 9 à 11, associée à des matières de rembourrage et de garnissage (3, 4).

## Claims

1. Spring element made of thermoplastic material for a suspension frame (2, 2') of a seat, a bed base, a mattress or the like, said spring element (6, 6'), intended to be interposed between a support structure (6, 6', 5) and a layer of stuffing material (3), has a symmetrical shape around a longitudinal central axis (7) and comprises:
- a base (8) adapted to cooperate with said support structure (6, 6', 5),
- a bearing structure (9) intended to form a contact surface with the layer of stuffing material (3), and
- suspension means (10) arranged between said base (8) and said bearing structure (9),
**characterized in that** said suspension means (10) consist of several rectilinear or substantially rectilinear suspension arms (20), distributed in a radiating manner around said longitudinal axis (7), in three superposed stages A, B and C, the arms (20A and 20C) of the first and third stages A and C, that respectively extend from the bearing structure (9) and from the base (8), each being connected to two arms (20B) of the insert stage B, said arms (20) extend, on the one hand, in each of said superposed stages A, B and C, obliquely between said base (8) and said bearing structure (9), and on the other hand, between two adjacent stages, according to two opposite slopes, and said arms (20) of two adjacent stages, connected by their opposite ends at a connecting hinge (21) so as to form suspension Vs, are transversally staggered.

2. Spring element according to claim 1, **characterized in that** the suspension arms (20) of one of the stages A, B or C are transversally staggered with respect to the suspension arms (20) of all the other stages.

3. Spring element according to any one of claims 1 or 2, **characterized in that** the suspension means (10) comprise:
- three to six arms (20A and 20C) in the first and third stages A and C, and
- six to twelve arms (20B) for the insert stage B.

4. Spring element according to any one of claims 1-3, **characterized in that** each arm (20A) of the first stage A is extended by two arms (20B) of the second stage B between which it is inserted, said arms (20B) of the second stage B are each connected to one of the arms (20C) of the third stage C, each of the arms (20C) of the third stage C being connected to two arms (20B) of du second stage B, and each arm (20B) of said second stage B being inserted between one of said arms (20A) and one of said arms (20C).

5. Spring element according to any one of claims 1-4, **characterized in that** it comprises a bearing structure (9) provided with a central opening (11) delimited by an internal edge (12), and a base (8) delimited by a peripheral edge (14), the calibre of which is lower than that of said internal edge (12) of the bearing structure (9), the arms (20A) of the first stage converging from said internal edge (12) of the bearing structure (9) toward the centre of the spring element (6, 6'), the arms (20C) of the third stage C diverging from said peripheral edge (14) of the base (8) toward the outside, and the arms (20B) of the insert stage B extending obliquely between the opposite ends of the arms (20A and 20C) of said first and third stages A and C, the arms (20) of the different stages A, B and C extending, during the compression of the spring element (6, 6'), into the space (16) separating the edges (12, 14) of the central opening (11) of the bearing structure (9) and of the base (8).

6. Spring element according to any one of claims 1-5, **characterized in that**, at rest, the angle between the arms (20) of two adjacent stages is of the order of 30° to 40°.

7. Spring element according to any one of claims 1-6, **characterized in that** it is made single-piece by a single operation of thermoplastic material moulding.

8. Spring element for a seat, a bed base, a mattress or the like, **characterized in that** it consists of two spring elements (6, 6') according to any one of claims 1-7, assembled by their base (8, 8').

9. Suspension frame of a seat, a bed base, a mattress or the like, comprising spring elements (6, 6') according to any one of claims 1-7, inserted between a support structure (6, 6', 5) and a layer of stuffing material (3).

10. Frame according to claim 9, **characterized in that** it comprises a sheet-like support structure (5), made of a flexible or semi-rigid material, over at least one of the faces of which are fixed a plurality of spring elements (6, 6') according to any one of claims 1-7.

11. Frame according to claim 10, **characterized in that** it comprises first spring elements (6) according to any one of claims 1-7, arranged on one of the faces of the support sheet (5), and second spring elements (6'), also according to any one of claims 1-7, arranged on the other face of said support sheet (5), opposite said first spring elements (6'), each of said first spring elements (6) being rigidly attached with one of said second spring elements (6') at a receiving hole (5') formed within said sheet (5), thus forming spring element couples arranged on both sides of said support sheet (5), the base (8, 8') of one of the spring elements (6, 6') of said couple acting as the holding element of the other spring element (6, 6') of this couple.

12. Seat, bed base or mattress structure comprising a frame (2, 2') according to any one of claims 9-11, associated with stuffing and upholstery materials (3, 4).

## Patentansprüche

1. Federelement aus thermoplastischem Material für einen Aufhängungsrahmen (2,2') eines Sitzes, eines Bettrahmens, einer Matratze oder dergleichen, wobei das Federelement (6, 6') zur Anordnung zwischen einer Stützstruktur (6, 6', 5) und einer Polstermaterialschicht (3) vorgesehen ist, eine symmetrische Ausbildung um eine Längsmittelachse (7) aufweist und umfasst:
- eine Basis (8), welche zum Zusammenwirken mit der Stützstruktur (6, 6', 5) geeignet ist,
- eine Auflagestruktur (9) zur Bildung einer Kontaktfläche mit der Polstermaterialschicht (3), und
- Aufhängungseinrichtungen (10), welche zwischen der Basis (8) und der Auflagestruktur (9) vorgesehen sind,
**dadurch gekennzeichnet, dass** die Aufhängungseinrichtungen (10) durch mehrere gerade oder im Wesentlichen gerade Aufhängungsarme (20) gebildet sind, welche in drei übereinander liegenden Stufen A, B und C strahlenförmig um die Längsachse (7) verteilt sind, wobei die Arme (20A und 20C) der ersten und dritten Stufen A und C, welche sich von der Auflagestruktur (9) beziehungsweise der Basis (8) erstrecken, jeweils mit zwei Armen (20B) der Zwischenstufe B verbunden sind, wobei die Arme (20) sich einerseits in jeder der übereinander liegenden Stufen A, B und C schräg zwischen der Basis (8) und der Auflagestruktur (9) und andererseits, zwischen zwei benachbarten Stufen, in zwei entgegengesetzten Neigungen erstrecken, und die Arme (20) zweier benachbarter Stufen, welche an ihren gegenüberliegenden Enden an einem Verbindungsscharnier (21) zur Bildung von V-Aufhängungen miteinander verbunden sind, in Querrichtung versetzt sind.

2. Federelement nach Anspruch 1, **dadurch gekennzeichnet, dass** die Aufhängungsarme (20) einer der Stufen A, B oder C in bezug auf die Aufhängungsarme (20) aller anderen Stufen in Querrichtung versetzt sind.

3. Federelement nach einem der Ansprüche 1 oder 2, **dadurch gekennzeichnet, dass** die Aufhängungseinrichtungen (10) aufweisen:
- drei bis sechs Arme (20A und 20C) in den ersten und dritten Stufen A und C; und
- sechs bis zwölf Arme (20B) in der Zwischenstufe B.

4. Federelement nach einem der Ansprüche 1 bis 3, **dadurch gekennzeichnet, dass** jeder Arm (20A) der ersten Stufe A durch zwei Arme (20B) der zweiten Stufe B verlängert ist, zwischen denen er eingesetzt ist, wobei die Arme (20B) der zweiten Stufe B jeweils mit einem der Arme (20C) der dritten Stufe C verbunden ist, wobei jeder der Arne (20C) der dritten Stufe C mit zwei Armen (20B) der zweiten Stufe B verbunden ist, und jeder Arm (20B) der zweiten Stufe B zwischen einem der Arme (20A) und einem der Arme (20C) angeordnet ist.

5. Federelement nach einem der Ansprüche 1 bis 4, **dadurch gekennzeichnet, dass** es eine Auflagestruktur (9), welche mit einer mittigen Öffnung (11) versehen ist, die durch einen Innenrand (12) begrenzt ist, und eine Basis (8) aufweist, welche durch einen Umfangsrand (14) begrenzt ist, dessen Durchmesser geringer als derjenige des Innenrandes (12) der Auflagestruktur (9) ist, wobei die Arme (20A) der ersten Stufe ausgehend von dem Innenrand (12) der Auflagestruktur (9) zur Mitte des Federelements (6, 6') hin konvergieren, wobei die Arme (20C) der dritten Stufe C ausgehend von dem Umfangsrand (14) der Basis (9) nach außen divergieren, und wobei die Arme (20B) der Zwischenstufe B sich schräg zwischen den gegenüberliegenden Enden der Arme (20A und 20C) der ersten und der dritten Stufe A und C erstrecken, wobei die Arme (20) der verschiedenen Stufen A, B und C sich beim Zusammendrücken des Federelements (6,6') in dem Raum (16) erstrecken, welcher die Ränder (12, 14) der mittigen Öffnung (11) der Auflagestruktur (9) und der Basis (8) trennt.

6. Federelement nach einem der Ansprüche 1 bis 5, **dadurch gekennzeichnet, dass** der Winkel zwischen den Armen (20) zweier benachbarter Stufen in der Ruhestellung in einer Größenordnung zwischen 30° und 40° liegt.

7. Federelement nach einem der Ansprüche 1 bis 6, **dadurch gekennzeichnet, dass** er in einem einzigen Formvorgang einstückig aus thermoplastischen Material hergestellt ist.

8. Federelement für einen Sitz, einen Bettrahmen, eine Matratze oder dergleichen, **dadurch gekennzeichnet, dass** es aus zwei Federelementen (6, 6') nach einem der Ansprüche 1 bis 7 gebildet ist, welche an ihren Basen (8, 8') verbunden sind.

9. Aufhängungsrahmen für einen Sitz, einen Bettrahmen, eine Matratze oder dergleichen, mit Federelementen (6, 6') nach einem der Ansprüche 1 bis 7, die zwischen einer Stützstruktur (6, 6', 5) und einer Polstermaterialschicht (3) angeordnet sind.

10. Rahmen nach Anspruch 9, **dadurch gekennzeichnet, dass** er eine Stützstruktur (5) in Form einer aus einem biegsamen oder halbstarren Material gebildeten Bahn, wobei auf mindestens einer der Seiten derselben mehrere Federelemente (6, 6') nach einem der Ansprüche 1 bis 7 befestigt sind.

11. Rahmen nach Anspruch 10, **dadurch gekennzeichnet, dass** er erste Federelemente (6) nach einem der Ansprüche 1 bis 7, welche auf einer der Seiten der Stützbahn (5)) vorgesehen sind, und zweite Federelemente (6') - ebenfalls nach einem der Ansprüche 1 bis 7 - aufweist, welche auf der anderen Seite der Stützbahn (5) den ersten Federelementen (6) gegenüberliegend angeordnet sind, wobei jedes der ersten Federelemente (6) an einer in der Bahn (5) vorgesehenen Aufnahmeöffnung (5') mit einem der zweiten Federelemente (6') fest verbunden ist, wodurch Federelementpaare gebildet sind, welche zu beiden Seiten der Stützbahn (5) angeordnet sind, wobei die Basis (8, 8') eines der Federelemente (6, 6') des Paares das Haltelement des anderen Federelements (6, 6') des Paares bildet.

12. Sitz-, Bettrahmen- oder Matratzenstruktur mit einem Rahmen (2, 2') nach einem der Ansprüche 9 bis 11, in Verbindung mit Polster- und Füllmaterialien (3, 4).
